# EUROPEAN PATENT APPLICATION

(11) **EP 4 633 019 A1**
(43) Date of publication of application: **15.10.2025**
(21) Application number: 25166387.8
(22) Date of filing: 26.03.2025
(51) Int. Cl.: H02M 1/00, H02M 1/08, H02M 1/32, H02M 1/40, H02M 3/337

(54) **PUSH-PULL TRANSFORMER, DC-DC CONVERTER, AND UNINTERRUPTIBLE POWER SUPPLY**

(30) Priority: 28.03.2024 CN 202410374684
(71) Applicant: Lian Zheng Electronic (Shenzhen) Co., Ltd., Shenzhen, Guangdong 518101 (CN)
(72) Inventor: ZHANG, XIANG, 518101 SHENZHEN (CN); TIAN, MENG, 518101 SHENZHEN (CN)
(74) Representative: Schwan Schorer & Partner mbB

(57) **Abstract**

A push-pull transformer, a DC-DC converter, and a UPS are provided. The push-pull transformer includes: a push-pull transformer module including a primary and a secondary coil, the primary coil has a first, a second, and a third tap, the first tap is electrically connected to a DC input terminal, the second and the third tap are connected to a neutral line through a first and a second transistor respectively; and a first and a second control loop respectively controlling turn-on and turn-off of the first and the second transistor, each of the first and the second control loop includes a first and a second turn-off circuit, the latter's resistance is greater than the former's resistance, when the first or the second transistor is controlled to be turned off, the first or the second turn-off circuit is selected to perform turn-off based on the second or the third tap voltage.

## Description

### TECHNICAL FIELD

The present invention belongs to the field of power supplies, and particularly relates to a push-pull transformer, a DC-DC converter including the push-pull transformer, and an uninterruptible power supply (UPS) including the DC-DC converter.

### BACKGROUND

The statements in this part are merely intended to provide background information related to the present invention, to help understand the present invention. This background information does not necessarily constitute prior art.

A UPS is used to instantaneously switch to providing continuous power to a load from a backup power supply (e.g., a rechargeable battery) when a primary power supply (e.g., a mains power grid) is not in a normal state, to protect the load from damage due to power interruption of the primary power supply. When the backup power supply supplies power to the load, the backup power supply is connected to the load through a DC-DC converter (a battery discharger) and a DC-AC converter (an inverter) in turn, thereby converting a direct current output from the backup power supply into an alternating current suitable for the load.

The DC-DC converter controls a current flow of an input power supply by using an electronic switching element (e.g., an IGBT and a MOSFET) and a magnetic element (e.g., an inductor and a transformer), thereby implementing voltage conversion. A typical DC-DC converter includes a push-pull transformer and an inverter (DC-AC) bridge arm, where an output terminal of the inverter bridge arm is connected to a direct current bus. A core feature of the push-pull transformer is that two electronic switching elements alternately operate to control an output voltage. In a switching process of the electronic switching elements, there is usually a case in which a turn-off voltage stress exceeds a specification and damages the electronic switching elements. This severely affects lifespans of the electronic switching elements and, consequently, affects lifespans of the DC-DC converter and even the UPS. In the conventional technology, a solution to the problem is to improve the electronic switching elements, for example, to improve the overvoltage tolerance of the electronic switching elements. However, this solution has high costs and poor adaptability.

### SUMMARY

Therefore, the present invention aims to overcome the foregoing disadvantages of the conventional technology and provides a push-pull transformer, which includes:
a push-pull transformer module, including a primary coil and a secondary coil, where the primary coil has a first tap, a second tap, and a third tap, the first tap is electrically connected to a direct current input terminal, the second tap is connected to a neutral line through a first transistor, and the third tap is connected to the neutral line through a second transistor;
a first control loop configured to control turn-on and turn-off of the first transistor and a second control loop configured to control turn-on and turn-off of the second transistor, where each of the first control loop and the second control loop includes a first turn-off loop and a second turn-off loop, and resistance of the second turn-off loop is greater than that of the first turn-off loop,
where when the first transistor is controlled to be turned off, the first turn-off loop or the second turn-off loop of the first control loop is selected to perform turn-off based on a voltage of the second tap, and
when the second transistor is controlled to be turned off, the first turn-off loop or the second turn-off loop of the second control loop is selected to perform turn-off based on a voltage of the third tap.

According to the push-pull transformer of the present invention, preferably, each of the first control loop and the second control loop further includes a turn-on loop, and the first transistor or the second transistor is turned on through the turn-on loop.

According to the push-pull transformer of the present invention, preferably, when the voltage of the second tap or the voltage of the third tap is lower than a predetermined threshold, turn-off is performed through the first turn-off loop; and when the voltage of the second tap or the voltage of the third tap is greater than or equal to the predetermined threshold, the turn-off is performed through the second turn-off loop.

According to the push-pull transformer of the present invention, preferably, the control loop includes a first resistor, a second resistor, and a controllable switch, where the first resistor is electrically connected between a control terminal of the first transistor or the second transistor and a first terminal of the second resistor, a second terminal of the second resistor is electrically connected to a control signal input terminal, the controllable switch is connected in parallel to two terminals of the second resistor, the first resistor and the controllable switch constitute the first turn-off loop, and the first resistor and the second resistor constitute the second turn-off loop.

According to the push-pull transformer of the present invention, preferably, the control loop further includes a diode, a cathode of the diode is electrically connected to the first terminal of the second resistor, an anode of the diode is electrically connected to the second terminal of the second resistor, and the diode and the first resistor constitute the turn-on loop.

According to the push-pull transformer of the present invention, preferably, the push-pull transformer further includes a controller, where the controller includes a comparator, a first input terminal of the comparator is configured to receive the voltage of the second tap or the voltage of the third tap, a second input terminal of the comparator is configured to receive a reference voltage, and an output terminal of the comparator is electrically connected to a control terminal of the controllable switch to control turn-on and turn-off of the controllable switch.

According to the push-pull transformer of the present invention, preferably, the first input terminal of the comparator is electrically connected to the first tap or the second tap through a clamping diode, and an anode of the clamping diode is further electrically connected to an electrical signal source.

According to the push-pull transformer of the present invention, preferably, the first control loop and the second control loop share one comparator.

According to the push-pull transformer of the present invention, preferably, the controller further includes a protection circuit, and the protection circuit is configured to ground the anode of the clamping diode when both the first transistor and the second transistor are in a turned-off state.

According to another aspect, the present invention provides a DC-DC converter, including:
a direct current input terminal, configured to be electrically connected to a direct current power supply;
a direct current output terminal, configured to be electrically connected to a direct current bus;
the push-pull transformer according to the present invention; and
an AC-DC conversion module, including an AC input terminal and a DC output terminal, where the AC input terminal is electrically connected to the secondary coil of the push-pull transformer, and the DC output terminal is electrically connected to the direct current output terminal.

According to still another aspect, the present invention provides an uninterruptible power supply, including the DC-DC converter according to the present invention.

Compared with the conventional technology, the present invention can effectively control a saturation depth of a transformer, correct a severe magnetic bias in the transformer, effectively resolve a problem that a turn-off voltage stress of a MOSFET exceeds a specification, and extend the lifespans of the DC-DC converter and the uninterruptible power supply.

### BRIEF DESCRIPTION OF THE DRAWINGS

The following further describes the embodiments of the present invention with reference to the accompanying drawings, where:
FIG. 1 is a circuit topology of a DC-DC converter according to an embodiment of the present invention;
FIG. 2 is a circuit topology of a DC-DC converter according to an embodiment of the present invention;
FIG. 3 is a circuit topology of a DC-DC converter according to another embodiment of the present invention;
FIG. 4 is a circuit topology of a DC-DC converter according to still another embodiment of the present invention;
FIG. 5 is a circuit diagram of a UPS according to an embodiment of the present invention; and
FIG. 6 is a circuit diagram of a UPS according to another embodiment of the present invention.

### DETAILED DESCRIPTION

To make the objectives, technical solutions, and advantages of the present invention clearer, the following further describes the present invention in detail through specific embodiments with reference to the accompanying drawings. It should be understood that the specific embodiments described herein are merely intended to explain the present invention, and are not intended to limit the present invention.

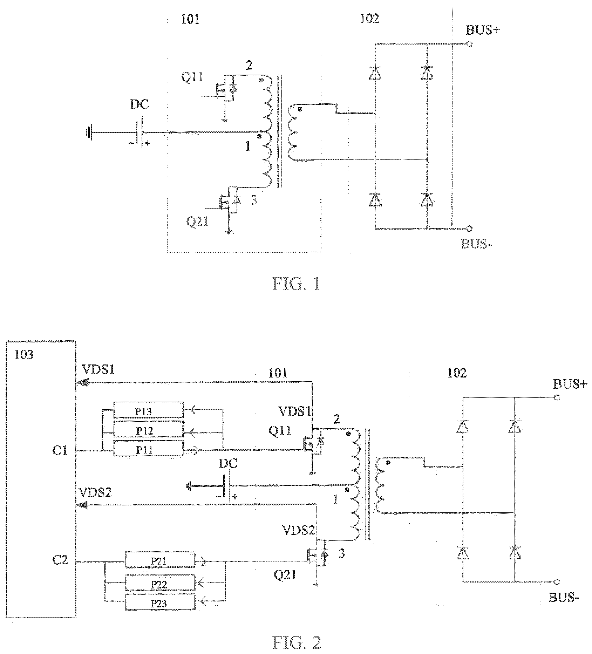

An embodiment of the present invention provides a DC-DC converter, a circuit topology of which is shown in FIG. 1. The DC-DC converter includes a push-pull transformer module 101 and an AC-DC conversion module 102 that are sequentially electrically connected between a direct current power supply DC (e.g., a battery) and a direct current bus BUS. The push-pull transformer module 101 includes a primary coil and a secondary coil. A first tap (a central tap) 1 of the primary coil is electrically connected to a positive electrode of the direct current power supply DC, a second tap 2 is connected to a neutral line (e.g., ground) through a first metal-oxide-semiconductor field-effect transistor (MOSFET) Q11, and a third tap 3 is connected to the neutral line (e.g., ground) through a second MOSFET Q21. By controlling the MOSFETs Q11 and Q21 to be rapidly and alternately turned on, a rapidly alternating magnetic field is generated in the primary coil, thereby inducing an alternating voltage in the secondary coil. The AC-DC conversion module 102 includes a rectifier bridge composed of four diodes. The rectifier bridge receives an alternating voltage from the secondary coil at its AC input terminal, performs AC-DC conversion on the alternating voltage, and then supplies a rectified voltage to the direct current bus BUS. The AC-DC conversion module 102 in this embodiment of the present invention is not limited to a bridge-type full-wave rectifier circuit shown in FIG. 1, and any form of AC-DC conversion circuit known in the art may be applied to the present invention.

In the embodiment of the present invention, the rapidly alternate conduction of the MOSFETs Q11 and Q21 is implemented by providing push-pull control signals to control terminals (gates) of the MOSFETs. The control signals may be provided by a dedicated controller (not shown in FIG. 1). For example, the controller is configured to include a processing circuit for performing turn-on/turn-off driving control of each MOSFET. The processing circuit may include digital electronic circuits such as an operation processing apparatus and a storage apparatus, may include analog electronic circuits such as a comparator, an operational amplifier, and a differential amplifier, or may include both digital electronic circuits and analog electronic circuits.

The inventors have found that if a voltage of the direct current bus fluctuates, for example, the voltage drops due to instantaneous capacitor switching at a load side, the controller providing push-pull control signals will extend conduction time of a currently conducting MOSFET (e.g., the first MOSFET Q11 in FIG. 1) upon receiving such a voltage drop through a voltage feedback loop. This leads to saturation of a transformer, causing most of energy to be stored in a leakage inductor. Therefore, for example, when the first MOSFET Q11 is turned off, an extremely high voltage stress is generated in the second MOSFET Q21. If the voltage stress exceeds a voltage tolerance specification of a MOSFET, the MOSFET Q21 may be damaged. Similarly, if the voltage of the direct current bus fluctuates upward, the controller will shorten the conduction time of the currently conducting MOSFET or even cause a voltage signal of the MOSFET to be lost, resulting in a severe imbalance of a push-pull voltage. A unilateral loss of the voltage signal may cause continuous conduction of the opposing MOSFET, which can also lead to saturation of the transformer. In this embodiment of the present invention, the first MOSFET Q11 and the second MOSFET Q21 are opposing to each other.

The embodiment of the present invention provides a solution to resolve a problem that a voltage stress of the opposing MOSFET exceeds a specification by reducing a turn-off speed of the currently conducting MOSFET.

An embodiment of the present invention provides a push-pull transformer and a DC-DC converter including the push-pull transformer. A specific circuit topology is shown in FIG. 2, and additionally has a controller 103 on the basis of the circuit topology shown in FIG. 1. The controller 103 receives drain voltages VDS1 (i.e., a voltage of the second tap 2) and VDS2 (i.e., a voltage of the third tap 3) of the first MOSFET Q11 and the second MOSFET Q21, and controls turn-on and turn-off of the first MOSFET Q11 and the second MOSFET Q21 based on the drain voltages VDS1 and VDS2. Furthermore, ports C1 and C2 of the controller 103 are connected to the gates of the first MOSFET Q11 and the second MOSFET Q21 through control loops, respectively. The ports C1 and C2 are control signal output terminals of the controller 103, and are configured to provide pulse-width modulation (PWM) signals to control signal input terminals of the corresponding control loops. Each control loop includes a turn-on loop P11/P21, a first turn-off loop P121P22, and a second turn-off loop P13/P23, where resistance of the second turn-offloop P13/P23 is greater than that of the first turn-off loop P12/P22. In the embodiment of the present invention, the turn-on loop refers to a loop that controls transition of a MOSFET from turn-off to turn-on, and the turn-off loop refers to a loop that controls transition of the MOSFET from turn-on to turn-off. Optionally, the turn-on loop P11/P21 and the first turn-off loop P12/P22 are combined into a current path, that is, the first turn-off loop P12/P22 also serves as a turn-on loop.

Under a normal condition (i.e., when the transformer is not saturated), the port C1 controls the turn-on of the first MOSFET Q11 through the turn-on loop P11 and controls the turn-off of the first MOSFET Q11 through the first turn-off loop P12; and the port C2 controls the turn-on of the second MOSFET Q21 through the turn-on loop P21 and controls the turn-off of the second MOSFET Q21 through the first turn-off loop P22.

When the transformer becomes saturated, a current of the currently conducting MOSFET increases abruptly, causing a corresponding drain voltage VDS I or VDS2 to exceed a threshold. Upon detecting that the drain voltage exceeds the threshold, the controller 103 controls the corresponding MOSFET to be turned off through the second turn-off loop P13 or P23. The second turn-off loop can increase turn-off loop impedance of the MOSFET Q11 or Q21, to reduce a turn-off speed of the MOSFET, thereby effectively reducing a voltage at the instant when the opposing MOSFET is turned on, and resolving a problem that a voltage stress of the opposing MOSFET exceeds a specification. Additionally, the MOSFET Q11 or Q21 may be turned off in advance by setting different voltage thresholds, thereby effectively controlling a saturation depth of the transformer.

That the currently conducting MOSFET is the first MOSFET Q11 is used as an example for description, if the transformer becomes saturated, the controller 103 detects that the drain voltage VDS1 exceeds the threshold and then controls the first MOSFET Q11 to be turned off through the second turn-off loop P13. If the first MOSFET Q11 is turned off normally (that is, turned off through the first turn-off loop P12), a turn-off speed is fast, and all leakage inductance energy of the transformer is applied to the second MOSFET Q21, resulting in that a voltage stress at the instant when the second MOSFET Q21 is turned on exceeds a specification and then the second MOSFET is damaged. By using the second turn-off loop P13 with higher resistance to turn off the first MOSFET Q11, the turn-off speed of Q11 is reduced, which effectively reduces the voltage stress of the second MOSFET Q21.

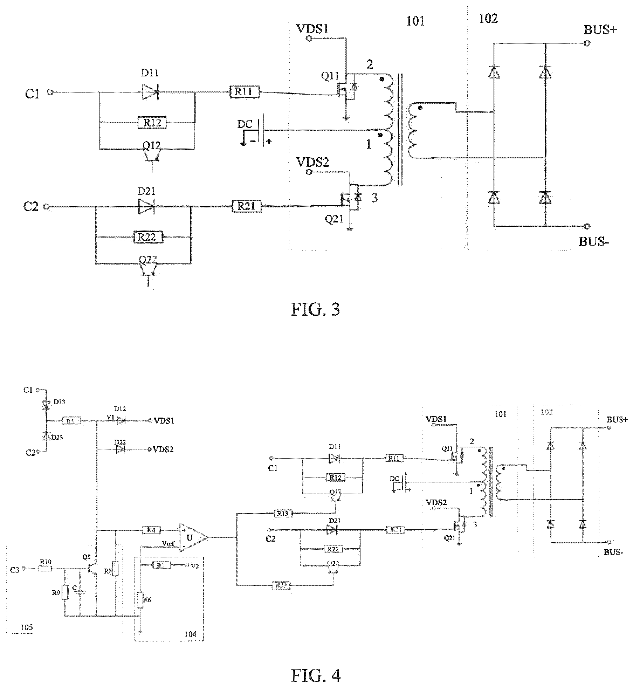

Another embodiment of the present invention provides a push-pull transformer and a DC-DC converter including the push-pull transformer. A circuit topology of the DC-DC converter is shown in FIG. 3, exemplarily illustrating a specific circuit topology of control loops of the push-pull transformer shown in FIG. 2. The control loop of the first MOSFET Q11 includes two resistors R11 and R12, one diode D11, and one triode Q12. The resistor R11 is connected between a gate of the first MOSFET Q11 and a cathode of the diode D11. An anode of the diode D11 is electrically connected to the port C1 of the controller. The resistor R12 and the triode Q12 are separately connected in parallel to the diode D11. The diode D11 and the resistor R11 are connected in series to constitute a turn-on loop. The triode Q12 and the resistor R11 are connected in series to constitute a first turn-off loop. The resistors R12 and R11 are connected in series to constitute a second turn-off loop. Similarly, the control loop of the second MOSFET Q21 includes two resistors R21 and R22, one diode D21, and one triode Q22. The resistor R21 is connected between a gate of the second MOSFET Q21 and a cathode of the diode D21. An anode of the diode D21 is electrically connected to the port C2 of the controller. The resistor R22 and the triode Q22 are separately connected in parallel to the diode D21. The diode D21 and the resistor R21 are connected in series to constitute a turn-on loop. The triode Q22 and the resistor R21 are connected in series to constitute a first turn-off loop. The resistors R22 and R21 are connected in series to constitute a second turn-off loop.

To implement DC-DC conversion, the first MOSFET Q11 and the second MOSFET Q21 are controlled to be alternately turned on. The first MOSFET Q11 is used as an example for description in the following, and the second MOSFET Q21 has the same operating logic. When the first MOSFET Q11 is controlled to be turned on, the port C1 outputs a high level and supplies a driving voltage to the gate of the MOSFET Q11 through the diode D11 and the resistor R11. When the MOSFET Q11 is controlled to be turned off, the port C1 outputs a low level. If it is detected that the drain voltage VDS1 of the MOSFET Q11 is below a predetermined threshold, it indicates that the transformer is not saturated, the transistor Q12 is controlled to be turned on, and the gate of MOSFET Q11 discharges through the resistor R11 and the triode Q12. If it is detected that the drain voltage VDS1 of the MOSFET Q11 is greater than or equal to the predetermined threshold, it indicates the transformer is saturated, the triode Q12 is controlled to be turned off, and the gate of MOSFET Q11 discharges through a series circuit of the resistors R11 and R12. It is clear that, in this embodiment, the impedance of the first turn-off loop is R11, while the impedance of the second turn-off loop is R11+R12. High resistance reduces the turn-off speed. Specifically, impedance values of R11 and R12 may be set according to actual requirements, thereby implementing a desired impedance ratio R11/(R11+R12) of the turn-off loops.

In this embodiment, the turn-on and turn-off of the triode Q12/Q22 are controlled based on the drain voltage VDS1/VDS2 of the MOSFET Q11/Q21, thereby implementing switching of the turn-off loops to prevent the voltage stress of the MOSFET from exceeding a specification. The triode Q12/Q22 may be replaced with any controllable switching element known in the art.

Still another embodiment of the present invention provides a push-pull transformer and a DC-DC converter including the push-pull transformer. A circuit topology of the DC-DC converter is shown in FIG. 4, exemplarily illustrating a control circuit of the triode Q12/Q22 of the control loop shown in FIG. 3. The control circuit includes a comparator U; a resistor R13 connected between an output terminal of the comparator U and a base of the triode Q12; a diode D13, a resistor R5, and a resistor R4 that are sequentially connected between the port C1 of the controller 103 and a non-inverting input terminal of the comparator U; and a diode D12 connected between a node between the resistors R4 and R5 and the drain of the first MOSFET Q11, where an anode of the diode D13 is connected to the port C1, and a cathode of diode D12 is connected to the drain of the first MOSFET Q11. A similar configuration is set for the triode Q22. In addition to the shared comparator U and resistors R4 and R5, a resistor R23 is connected between the output terminal of comparator U and a base of transistor Q22, a diode D23 is connected between the port C2 and the resistor R5, and a diode D22 is connected between the node between the resistors R4 and R5 and the drain of the second MOSFET Q21. An inverting input terminal of the comparator U provides a reference voltage Vref. The reference voltage Vref is directly related to a drain voltage threshold of the MOSFET. A value of the reference voltage Vref may be set based on a value of the drain voltage threshold. For example, in the circuit topology of FIG. 4, the reference voltage Vref = the drain voltage threshold + a voltage of the clamping diode D12/D22.

A control method of the control circuit is discussed by using the triode Q12 as an example, and the triode Q22 follows the same control method. In this embodiment, Q12 and Q22 are PNP-type triodes. When the port C1 of the controller 103 provides a high level (e.g., 12 V) to the gate of the first MOSFET Q11, the first MOSFET Q11 is turned on, and a low voltage VDS1 (e.g., 0.5 V) is generated at the drain. The port C1 also supplies a positive voltage to the non-inverting input terminal of the comparator U. The diode D12 is a clamping diode, the cathode of the diode receives the drain voltage VDS1 and clamps an anode voltage to V1 (e.g., 1.2 V to 1.5 V). The voltage V1 is provided to the non-inverting input terminal of the comparator U via the resistor R4. The comparator U compares a low non-inverting input voltage with the reference voltage Vref (e.g., 2 V) and outputs a low level. This low level is provided to the base of the PNP-type triode Q12 through the current-limiting resistor R13 to turn on the Q12. Therefore, when the port C1 provides a low level (e.g., 0 V) to the gate of the first MOSFET Q11 to turn off the first MOSFET, the gate of the Q11 discharges through the resistor R11. If the transformer becomes saturated, the drain voltage VDS1 rises abruptly, and then the anode of the diode D13 is clamped to a relatively high voltage V1, to input a high voltage to the non-inverting input terminal of the comparator U. The output terminal of the comparator U outputs a high level, and the high level is provided to the base of the triode Q12 through the current-limiting resistor R13, to turn off the triode Q12. In this case, when the first MOSFET Q11 is turned off, the gate of the first MOSFET discharges through both resistors R11 and R12. In the embodiment of the present invention, the non-inverting input voltage of the comparator U may be provided by a control power supply of the push-pull transformer or a dedicated electrical signal source (e.g., a voltage source), that is the ports C1 and C2 are connected to such dedicated signal sources.

Alternatively, in this embodiment, the triodes Q12 and Q22 may be NPN-type triodes. In this case, the reference voltage Vref is provided to the non-inverting input terminal of the comparator U, while a signal reflecting the drain voltage is input to the inverting input terminal of comparator U.

Further, referring to FIG. 4, the reference voltage Vref is provided by a voltage divider circuit 104 composed of resistors R6 and R7. The resistors R6 and R7 are connected in series between a voltage source V2 (e.g., 5 V) and a ground cable. The inverting input terminal of the comparator U is connected to a node between the resistors R6 and R7. By setting impedance values of the resistors R6 and R7, a preset reference voltage can be provided for the inverting input terminal of the comparator U.

Further, referring to FIG. 4, the DC-DC converter further includes a protection circuit 105 that includes a triode Q3, a resistor R9 connected between a base and an emitter of the triode Q3, and a resistor R10 connected between the base of the triode Q3 and a signal input terminal C3. The emitter of the triode Q3 is grounded. In a process of switching between the first MOSFET Q11 and the second MOSFET Q21, a dead zone exists due to a turn-on delay, that is, both the first MOSFET Q11 and the second MOSFET Q21 are in turned-off state. In this case, the drain voltages VDS1 and VDS2 exceed a DC power supply voltage, causing a relatively high voltage V1 to be clamped at the anodes of diodes D12 and D22. If this relatively high voltage V1 is provided to the non-inverting input terminal of the comparator U, a misjudgment of the comparator U is caused, and the first MOSFET Q11 and the second MOSFET Q21 are continuously turned off. To prevent the misjudgment, in this case, a relatively high voltage signal is provided at the signal input terminal C3. This relatively high voltage signal drives the base of the triode Q3 through the resistors R9 and R10 to turn on the triode Q3, thereby diverting the relatively high voltage V1. When the voltages at both the ports C1 and C2 are low, the signal provided at the signal input terminal C3 is high. In other cases, the signals provided at the signal input terminal C3 are low. Preferably, a capacitor C is connected in parallel between the base and the emitter of the triode Q3, and the capacitor C can cause a turn-off delay of the triode Q3, to prevent a line misjudgment. In addition, a resistor R8 is preferably connected in parallel between a collector and the emitter of the triode Q3. The resistor R8 and the resistor R5 form a voltage divider circuit, thereby stabilizing the voltage at the non-inverting input terminal of the comparator U.

The primary purpose of the protection circuit 105 in this embodiment is to ground the relatively high voltage V1 for diverting in the dead zone of switching between the first MOSFET Q11 and the second MOSFET Q21. Any circuit capable of achieving this purpose may be applied to the present invention.

The push-pull transformer and the corresponding DC-DC converter in the embodiments of the present invention can effectively control a saturation depth of a transformer, correct a severe magnetic bias in the transformer, and effectively resolve a problem that a turn-off voltage stress of a MOSFET exceeds a specification, thereby reducing an operating frequency of the converter, and saving costs.

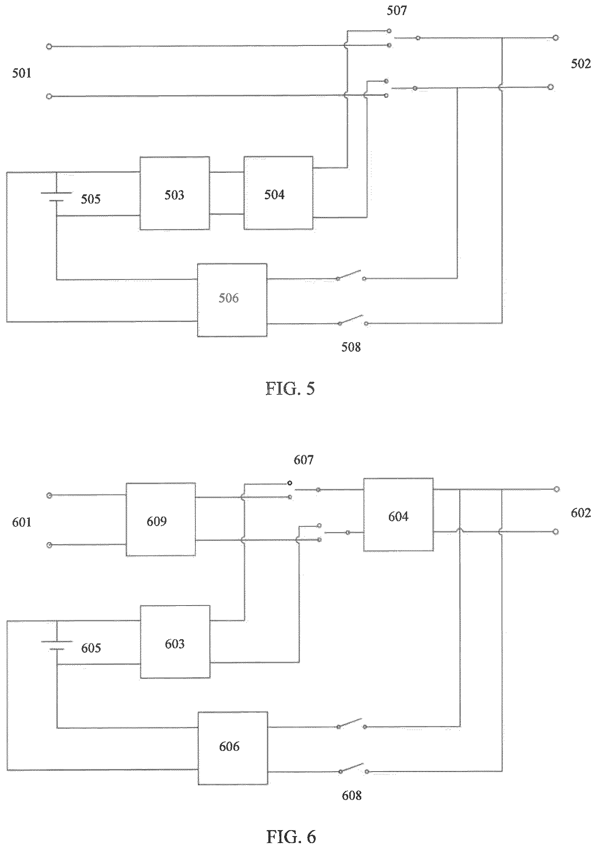

An embodiment of the present invention further provides an offline UPS. FIG. 5 is a circuit diagram of the offline UPS. The offline UPS includes an alternating current input terminal 501, an alternating current output terminal 502, a DC-DC converter 503, an inverter 504, a rechargeable battery 505, and a charger 506. A primary switching switch component 507 is connected between the alternating current input terminal 501 and the alternating current output terminal 502. Optionally, a charging switch component 508 is connected between the charger 506 and the alternating current output terminal 502. When the mains supply is normal, a load is directly powered by the mains supply, and the rechargeable battery 505 is charged through the charger 506. When the mains supply fails, the rechargeable battery 505 supplies power to the load through the DC-DC converter 503 and the inverter 504. The DC-DC converter 503 in the UPS of this embodiment employs the DC-DC converter of the present invention, which can effectively control a saturation depth of a transformer, correct a severe magnetic bias in the transformer, and effectively resolve a problem that a turn-off voltage stress of a MOSFET exceeds a specification, thereby reducing an operating frequency of the converter, prolonging the lifespan of the UPS, and saving costs.

An embodiment of the present invention further provides an online UPS. FIG. 6 is a circuit diagram of the online UPS. The online UPS includes an alternating current input terminal 601; an alternating current output terminal 602; a rectifier 609, a primary switching switch component 607, and an inverter 604 that are sequentially connected between the alternating current input terminal 601 and the alternating current output terminal 602; a rechargeable battery 605; a DC-DC converter 603 connected between the rechargeable battery 605 and the primary switching switch component 607; and a charger 606. Optionally, the online UPS further includes a charging switch component 608 connected between the charger 606 and the alternating current output terminal 602. When the mains supply is normal, a load is powered by the mains supply after the mains supply is converted by the rectifier 609 and the inverter 604, and the rechargeable battery 605 is charged by the charger 606. When the mains supply is fails, the rechargeable battery supplies power to the load through the DC-DC converter 603 and the inverter 604. The DC-DC converter 603 in the UPS of this embodiment employs the DC-DC converter of the present invention, which can effectively control a saturation depth of a transformer, correct a severe bias in the transformer, and effectively resolve a problem that a turn-off voltage stress of a MOSFET exceeds a specification, thereby reducing an operating frequency of the converter, prolonging the lifespan of the UPS, and saving costs.

According to other embodiments of the present invention, a MOSFET transistor may be replaced with other transistors, such as an IGBT transistor. The MOSFET transistor is more preferred due to its excellent current-voltage characteristics.

In the embodiments of the present invention, signals of the ports C1, C2, and C3 may be provided by an external controller.

According to other embodiments of the present invention, the triodes Q12 and Q22 are respectively controlled by using different comparators.

Although the present invention has been described by using preferred embodiments, the present invention is not limited to the embodiments described herein, and includes various changes and variations without departing from the scope of the present invention.

## Claims

1. A push-pull transformer, comprising:
a push-pull transformer module, comprising a primary coil and a secondary coil, wherein the primary coil has a first tap, a second tap, and a third tap, the first tap is electrically connected to a direct current input terminal, the second tap is connected to a neutral line through a first transistor, and the third tap is connected to the neutral line through a second transistor;
a first control loop configured to control turn-on and turn-off of the first transistor and a second control loop configured to control turn-on and turn-off of the second transistor, wherein each of the first control loop and the second control loop comprises a first turn-off loop and a second turn-off loop, and resistance of the second turn-off loop is greater than that of the first turn-off loop,
wherein when the first transistor is controlled to be turned off, the first turn-off loop or the second turn-off loop of the first control loop is selected to perform turn-off based on a voltage of the second tap, and
when the second transistor is controlled to be turned off, the first turn-off loop or the second turn-off loop of the second control loop is selected to perform turn-off based on a voltage of the third tap.

2. The push-pull transformer according to claim 1, wherein each of the first control loop and the second control loop further comprises a turn-on loop, and the first transistor or the second transistor is turned on through the turn-on loop.

3. The push-pull transformer according to claim 1 or 2, wherein when the voltage of the second tap or the third tap is lower than a predetermined threshold, turn-off is performed through the first turn-off loop; and when the voltage of the second tap or the third tap is greater than or equal to the predetermined threshold, the turn-off is performed through the second turn-off loop.

4. The push-pull transformer according to claim 2, wherein the control loop comprises a first resistor, a second resistor, and a controllable switch, wherein the first resistor is electrically connected between a control terminal of the first transistor or the second transistor and a first terminal of the second resistor, a second terminal of the second resistor is electrically connected to a control signal input terminal, the controllable switch is connected in parallel to two terminals of the second resistor, the first resistor and the controllable switch constitute the first turn-off loop, and the first resistor and the second resistor constitute the second turn-off loop.

5. The push-pull transformer according to claim 4, wherein the control loop further comprises a diode, a cathode of the diode is electrically connected to the first terminal of the second resistor, an anode of the diode is electrically connected to the second terminal of the second resistor, and the diode and the first resistor constitute the turn-on loop.

6. The push-pull transformer according to claim 5, further comprising a controller, wherein the controller comprises a comparator, a first input terminal of the comparator is configured to receive the voltage of the second tap or the voltage of the third tap, a second input terminal of the comparator is configured to receive a reference voltage, and an output terminal of the comparator is electrically connected to a control terminal of the controllable switch to control turn-on and turn-off of the controllable switch.

7. The push-pull transformer according to claim 6, wherein the first input terminal of the comparator is electrically connected to the first tap or the second tap through a clamping diode, and an anode of the clamping diode is further electrically connected to an electrical signal source.

8. The push-pull transformer according to claim 6 or 7, wherein the first control loop and the second control loop share one comparator.

9. The push-pull transformer according to claim 7, wherein the controller further comprises a protection circuit, and the protection circuit is configured to ground the anode of the clamping diode when both the first transistor and the second transistor are in a turned-off state.

10. A DC-DC converter, comprising:
a direct current input terminal, configured to be electrically connected to a direct current power supply;
a direct current output terminal, configured to be electrically connected to a direct current bus;
the push-pull transformer according to any one of claims 1 to 9; and
an AC-DC conversion module, comprising an AC input terminal and a DC output terminal, wherein the AC input terminal is electrically connected to the secondary coil of the push-pull transformer, and the DC output terminal is electrically connected to the direct current output terminal.

11. An uninterruptible power supply, comprising the DC-DC converter according to claim 10.
